# EUROPÄISCHE PATENTANMELDUNG

(11) **EP 0 855 532 A2**
(43) Veröffentlichungstag der Anmeldung: **29.07.1998**
(21) Anmeldenummer: 97120964.8
(22) Anmeldetag: 28.11.1997
(51) Int. Cl.: F16F 7/104

(54) **Vorrichtung zur Geräuschdämmung für schwingungsfähige Bestandteile eines Kraftfahrzeug-Hydrauliksystems**

(30) Priorität: 23.01.1997 DE 19702172
(71) Anmelder: Aeroquip-Vickers International GmbH, 76532 Baden-Baden (DE)
(72) Erfinder: Seidel, Michael, 76534 Baden-Baden (DE); Fritz, Thomas, 76593 Gernsbach (DE)
(74) Vertreter: Gleiss, Alf-Olav, Dr.jur. Dipl.-Ing.

(57) **Zusammenfassung**

Die Erfindung betrifft eine Vorrichtung zur Dämmung der Geräuschabstrahlung von schwingungsfähigen Bestandteilen 1, insbesondere Fluidbehältern, des Hydrauliksystems von Kraftfahrzeugen, mit wenigstens einer Schwingungsdämpfungsmasse 9, 10, 11 - 15, 16, 20, 21, 22, die an die Wandung 4 des jeweiligen Geräusch zu dämmenden Bestandteils 1 angekoppelt und auf die zu dämpfende(n) Schwingung(en) abgestimmt ist.

## Beschreibung

Die vorliegende Erfindung betrifft eine Vorrichtung zur Dämmung der Geräuschabstrahlung von schwingungsfähigen Bestandteilen, insbesondere Fluidbehältern, des Hydrauliksystems von Kraftfahrzeugen.

Das Hydrauliksystem von Kraftfahrzeugen besteht unter anderem aus Fluidbehältern, einschließlich einem Vorratsbehälter für das Hydraulikfluid und fluidführenden Verbindungsleitungen. Zur Förderung des Hydraulikfluids dient eine Hydraulikpumpe. Die Hydraulikpumpe kann entweder direkt mit einem Fluidbehälter oder indirekt über die Verbindungsleitungen verbunden sein. Zum Antrieb der Hydraulikpumpe kommt ein Elektromotor in Betracht. Alternativ kann die Hydraulikpumpe durch den Fahrzeugmotor angetrieben werden. Der Antrieb der Pumpe kann dabei beispielsweise über einen Riementrieb erfolgen. In die fluidführenden Bestandteile des Hydrauliksystems werden durch die Hydraulikpumpe Schwingungen eingeleitet, die von der Wandung des jeweiligen Bestandteils, beispielsweise den Fluidbehältern oder den Verbindungsleitungen, als störendes Geräusch abgestrahlt werden. Im Rahmen einer geräuscharmen Auslegung von Kraftfahrzeugen besteht ein Bedarf, auch die Geräuschabstrahlung von schwingungsfähigen Bestandteilen eines Hydrauliksystems so weit wie möglich zu verringern.

Eine Aufgabe der vorliegenden Erfindung besteht demnach darin, eine Geräuschdämmungsvorrichtung für schwingungsfähige Bestandteile des Hydrauliksystems von Kraftfahrzeugen zu schaffen, die zu einer niedrigen Geräuschbilanz eines Kraftfahrzeugs positiv beiträgt. Gelöst wird diese Aufgabe durch eine Vorrichtung mit den Merkmalen des Patentanspruchs 1. Vorteilhafte Weiterbildungen der Erfindung sind in den Unteransprüchen angegeben.

Demnach sieht die Erfindung die Ankopplung von wenigstens einer Schwingungsdämpfungsmasse an die Wandung des jeweiligen Geräusch zu dämmenden Bestandteils vor, wobei diese Schwingungsdämpfungsmasse bevorzugt auf wenigstens eine Resonanzfrequenz des Geräusch zu. dämmenden Bestandteils abgestimmt ist. Mit anderen Worten schlägt die Erfindung zur Geräuschminderung im Bereich eines Kraftfahrzeug-Hydrauliksystems gezielte Dämpfungsmaßnahmen der schwingungsfähigen Bestandteile dieses Systems vor, die zumindest zu einer deutlichen Reduzierung der Geräuschemission dieser Bestandteile führt.

Die erfindungsgemäßen zur Geräuschemission eingesetzten Schwingungsdämpfungsmassen können innen und/oder außen an der Wandung des jeweiligen Geräusch zu dämmenden Bestandteils angekoppelt sein.

Die Abstimmung der jeweiligen Schwingungsmasse auf die zu dämpfende Schwingung bzw. die zu dämpfenden Schwingungen kann in unterschiedlicher Weise erfolgen. Bevorzugt erfolgt die Abstimmung durch Wahl der Größe ihrer Masse. Alternativ oder ergänzend kann die Abstimmung durch die Form der Schwingungsdämpfungsmasse vorgenommen werden. Eine weitere ergänzende oder alternative Maßnahme zur Abstimmung besteht in der Wahl der Lage der Schwingungsdämpfungsmasse auf der Wandung des Geräusch zu dämmenden Bestandteils, in der Wahl des Materials, aus welchem die Schwingungsdämpfungsmasse besteht, wobei bevorzugt dasselbe Material wie dasjenige des Geräusch zu dämmenden Bestandteils eingesetzt wird, und in der Wahl der Ankopplungs- bzw. Verbindungsart der Schwingungsdämpfungsmasse an der Wandung des Geräusch zu dämmenden Bestandteils. Beispielsweise kann die Anbindung der Schwingungsdämpfungsmasse an die Wandung des Geräusch zu dämmenden Bestandteils schwingungsmäßig hart oder weich erfolgen, beispielsweise als mehr oder weniger stark federndes Verbindungselement. Die angesprochenen Schwingungsdämpfungsmaßnahmen können teilweise oder insgesamt kombiniert eingesetzt werden.

Eine bevorzugte Ausführungsform der Schwingungsdämpfungsmasse ist die Rippenform, wobei bei der Verwendung mehrerer Rippen, diese entweder unter gegenseitigem Abstand oder sich kreuzend auf der Wandung des Geräusch zu dämmenden Bestandteils angebracht sind.

Eine weitere bevorzugte Maßnahme zur Verringerung der Geräuschemission sieht eine mehrwandige, beispielsweise zwei- oder doppelwandige Ausbildung des Geräusch zu dämmenden Bestandteils vor, wobei die Wände des mehrwandigen Aufbaus geräuschdämmend entkoppelt sind. Diese geräuschdämmende Entkopplung kann beispielsweise dadurch bewirkt werden, daß ein Zwischenraum zwischen den Wänden wenigstens teilweise mit schwingungsdämpfendem Material gefüllt wird. Alternativ hierzu kann der Zwischenraum evakuiert sein. Im Fall der Befüllung des Zwischenraums mit schwingungsdämpfendem Material wird diese bevorzugt an die zu absorbierenden Schwingungen angepaßt. Zumindest eine der Wandungen des mehrwandig aufgebauten Bestandteils des Hydrauliksystems ist mit der erfindungsgemäßen Schwingungsdämpfungsmasse versehen. Zur Optimierung der Geräuschemission sind jedoch bevorzugt sämtliche Wandungen mit der erfindungsgemäßen Schwingungsdämpfungsmasse versehen, wobei diese Schwingungsdämpfungsmasse bevorzugt mit dem schwingungsdämpfenden mehrvandigen Aufbau abgestimmt ist. Die Anwendung der erfindungsgemäßen Vorrichtung zur Dämmung der Geräuschemission kommt grundsätzlich für sämtliche Bestandteile eines Kraftfahrzeug-Hydrauliksystems in Betracht, also sowohl für Behälter, wie etwa Vorratsbehälter als auch für deren Verbindungs- bzw. Zuleitungen. Der Schwerpunkt des Einsatzes der erfindungsgemäßen Vorrichtung liegt jedoch bei der Geräuschdämmung von großvolumigen Bestandteilen, wie z.B. Fluidvorratsbehältern.

Nachfolgend wird die Erfindung anhand der Zeichnungen beispielhaft näher erläuterte.Es zeigen:
Fig. 1 eine schematische Ansicht eines herkömmlichen Hydraulikfluidbehälters eines Kraftfahrzeug-Hydrauliksystems,
Fig. 2 eine perspektivische Ansicht des Fluidbehälters von Fig. 1, der mit einer ersten Ausführungsform der erfindungsgemäßen Schwingungsdämpfungsmasse versehen ist,
Fig. 3 den in Fig. 1 gezeigten Fluidbehälter, der mit einer seinen Umfang umschließenden Schwingungsdämpfungsmasse versehen ist,
Fig. 4 den in Fig. 1 gezeigten Fluidbehälter, der auf seiner Außenseite mit einer Mehrzahl von Rippen zur Schwingungsdämpfung versehen ist,
Fig. 5 eine Abwandlung der Ausführungsform von Fig. 4 mit sich kreuzenden Rippen zur Schwingungsdämpfung,
Fig. 6 den in Fig. 1 gezeigten Fluidbehälter, jedoch in geräuschdämmender doppelwandiger Ausführung,
Fig. 7 den Fluidbehälter von Fig. 6 mit inner- und außerhalb des Behälters angebrachten schwingungsdämpfenden Rippen,
Fig. 8 eine Variante von Fig. 7 mit ausschließlich innenliegend angebrachten schwingungsdämpfenden Rippen,
Fig. 9 eine Befüllung des Zwischenraums des Fluidbehälters von Fig. 6 mit schwingungsdämpfendem Material, und
Fig. 10 die in Fig. 9 gezeigten doppelwandigen Fluidbehälter mit schwingungsdämpfenden Rippen.

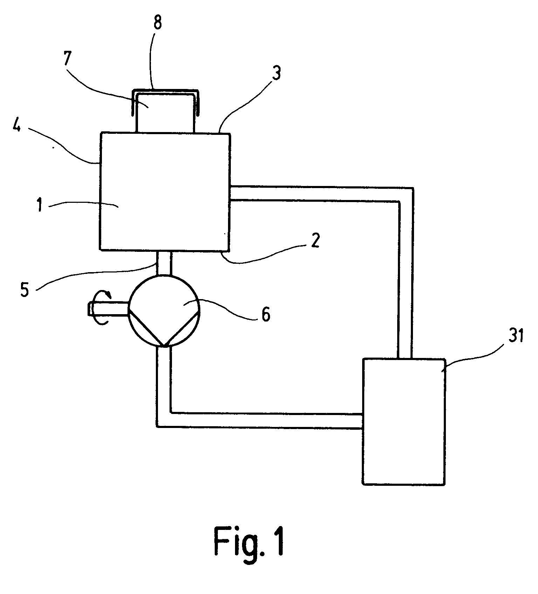

Der in Fig. 1 mit der Bezugsziffer 1 bezeichnete Fluidbehälter bildet einen Bestandteil des Hydrauliksystems eines Kraftfahrzeugs. Der Behälter 1 hat einen Boden 2 und eine diesem gegenüberliegende obere Wand 3, und der Boden 2 und die Wand 3 sind über eine vorzugsweise umlaufende zylindrische oder auch mehrflächige Wand 4 miteinander verbunden. In den Boden 2 mündet eine Hydraulikfluidleitung 5, in welcher eine Hydraulikpumpe 6 zur Förderung von in dem Behälter 1 bevorrateten Fluid, beispielsweise zu einem Lenksystem 31 angeordnet ist. Über eine Rückführleitung 32 gelangt das geförderte Fluid vom Lenksystem 31 wieder zrück in den Behälter 1. In die obere Wand 3 mündet ein Füllstutzen 7, der durch einen Deckel 8, vorzugsweise einen Schraubdeckel, verschlossen ist.

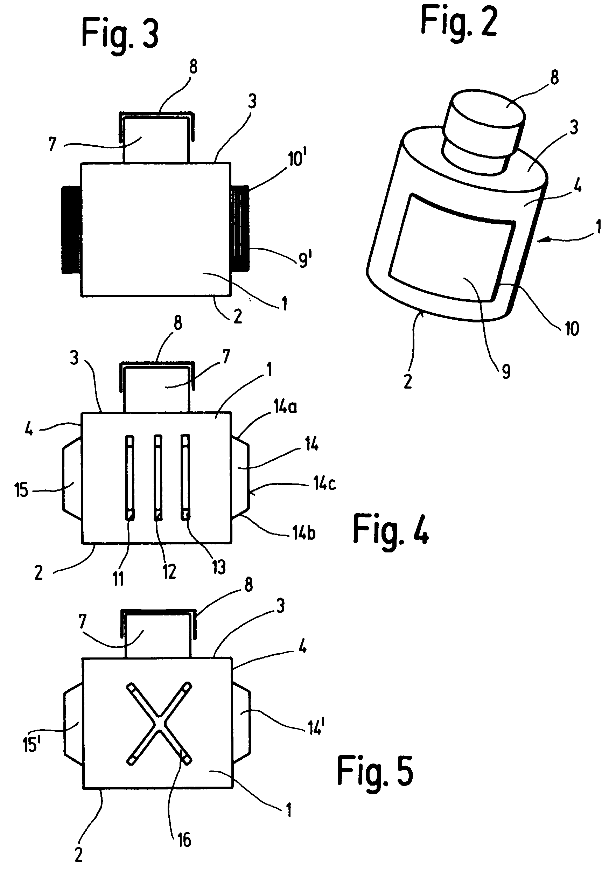

Wenn die Pumpe 6, beispielsweise durch einen Elektromotor beim Betrieb des Kraftfahrzeugs zur Förderung von Fluid in Gang gesetzt ist, werden Schwingungen durch den Betrieb der Pumpe, des Elektromotors oder des Fahrzeugmotors über die Leitung 5 auf den Behälter 1 übertragen und in Form von Geräusch in erster Linie vom Behälter 1 abgestrahlt. Diese Geräuschemission trägt zur allgemeinen Geräuschemission eines Kraftfahrzeugs bei. Die erfindungsgemäß zur Verringerung dieser Geräuschemission vorgesehenen Maßnahmen sind in Fig. 2 bis 10 dargestellt.

Wie in Fig. 2 gezeigt, ist auf die zylindrische Wandung 4 des Behälters 1 eine Schwingungsdämpfungsmasse 9 in Gestalt eines Blech- oder Kunststoffstreifens aufgebracht, der über eine Dämpfungsmasse 10 vorgegebener Härte auf der Wandung 4 befestigt ist. Die Größe und Form des Blechstreifens 9, seine Dicke und/oder seine Materialbeschaffenheit zusammen mit der Materialbeschaffenheit der Dämpfungsmasse 10 sind auf die zu dämpfende Schwingung abgestimmt, die durch die Pumpe 6 aufgrund ihres Betriebs in den Behälter 1 eingeleitet wird, und zwar sowohl durch Körperschall über die Leitung 5 als auch durch Schwingungen des Fluids, das im Hydrauliksystem enthalten ist. Insbesondere ist die Schwingungsdämpfungsmasse 9, 10 auf mindestens eine Resonanzfrequenz des Behälters 1 abgestimmt. Eine Ausführung ledigllich mit der Masse 10 ohne den Blech- oder Kunststoffstreifen 9 ist ebenfalls denkbar.

Eine alternative Maßnahme zur Schwingungsdämpfung ist in Fig. 3 gezeigt. Diese Maßnahme unterscheidet sich von derjenigen in Fig. 2 durch die Verwendung eines umlaufenden Blechstreifens 9', der über eine Dämpfungsmasse 10' entsprechend der Masse 10 an die Wandung 4 des Behälters 1 angekoppelt ist.

Fig. 4 zeigt eine weitere Ausführungsform der erfindungsgemäßen Vorrichtung zur Schwingungsdämpfung. Demnach bestehen die Dämpfungsmaßnahmen aus Rippen 11 bis 15, die unter gegenseitigem Abstand auf der Umfangswandung 4 des Behälters 1 angebracht, vorzugsweise einstückig mit dieser Wandung aus demselben Material gebildet sind. Die Dicke, Länge, Form und Masse und der gegenseitige Abstand der Rippen definiert die Abstimmung der Schwingungsdämpfungsrippen auf die in den Innenbehälter 1 beim Betrieb durch die Pumpe 6 eingeleiteten Schwingungen. Wie in Fig. 4 gezeigt, können die Rippen 11, 12, 13 zu Gruppen von mehreren Rippen mit identischem Abstand zusammengefaßt sein, während die ebenfalls dargestellten Rippen 14 bzw. 15 zu weiteren Rippengruppen gehören. Eine Besonderheit der Rippen 11 bis 15 besteht in ihren schräg abfallenden Rippenenden 14a und 14b und ihrer geradlinigen Oberkante 14c, die parallel zur Längsachse des Behälters 1 verläuft.

Fig. 5 zeigt eine weitere Anordnung von Schwingungsdämpfungsrippen, von denen die Rippen 14' und 15' so ausgelegt und angeordnet sind, wie die Rippen 14 und 15 in Fig. 4, während zusätzlich wenigstens eine, bevorzugt zwei einander gegenüberliegende kreuzförmige Rippenstruktur(en) auf dem Außenumfang 4 des Behälters 1 vorgesehen ist, die allgemein mit 16 bezeichnet ist, wobei die Enden dieser kreuz- bzw. X-förmigen Rippenanordnung ebenfalls schräg abfallende Flanken hat.

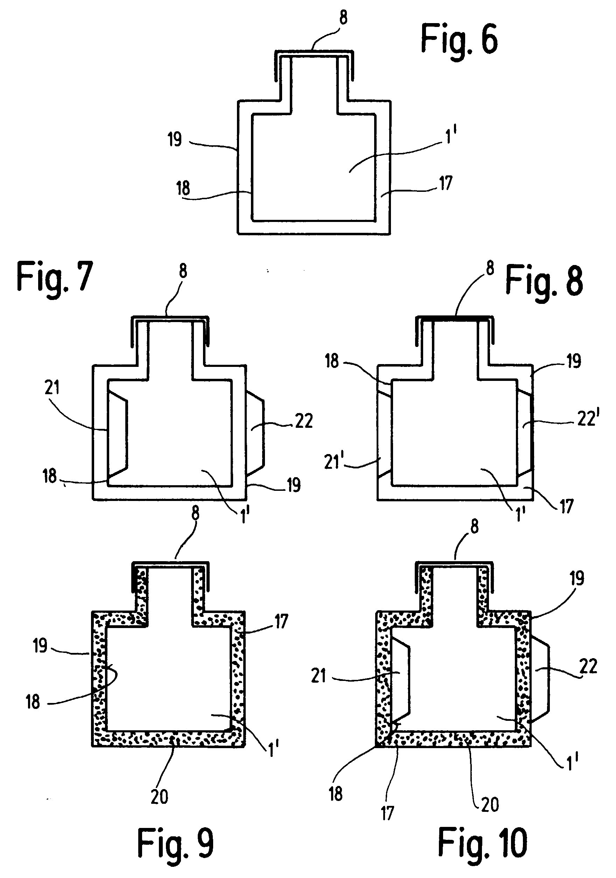

In Fig. 6 bis 10 ist eine weitere bevorzugte Ausführungsform der erfindungsgemäßen Dämpfungsmaßnahme gezeigt, die auf einem doppelwandig gebildeten Behälter 1' beruht, dessen allgemeiner Aufbau dem Behälter von Fig. 1 entspricht, in dem jedoch formgleich, jedoch mit geringeren Abmessungen unter Belassung eines Zwischenraums 17 ein Innengehäuse 18 innerhalb eines Außengehäuses 19 gebildet ist. Zur Entkopplung des das Hydraulikfluid tragenden Innengehäuses 18 vom Außengehäuse 19 ist der Zwischenraum 17 evakuiert. Hierzu alternative Entkopplungsmaßnahmen sind in Fig. 9 und 10 gezeigt, demnach der Zwischenraum 17 mit schwingungsdämpfendem Material 20 gefüllt ist. Die Füllung 20 ebenso wie die Abmessung des Zwischenraums 17 sind auf die zu dämpfenden, in den Behälter 1' eingeleiteten Schwingungen abgestimmt.

Bei der Ausführungsform gemäß Fig. 10 sind zusätzlich Schwingungsdämpfungsrippen 21 und 22 vorgesehen, die mit dem Innengehäuse 18 bzw. dem Außengehäuse 19 gekoppelt bzw. verbunden, vor allem einstückig gebildet sind.

Eine ähnliche Anordnung von Rippen am Behälter 1' ist bei der Ausführungsform von Fig. 7 gezeigt, dessen Zwischenraum 17 zwischen dem Innengehäuse 18 und dem Außengehäuse 19 jedoch evakuiert ist.

Fig. 8 zeigt eine Abwandlung der Ausführungsform von Fig. 7, demnach die Rippe 22 als Rippe 22' an die Außenseite des Innengehäuses 18 gekoppelt, im Zwischenraum 17 vorgesehen ist. Ebenfalls im Zwischenraum 17 ist die Rippe 21' vorgesehen, die fest mit der Innenseite des Außengehäuses 19 verbunden ist. Die Rippen 21' und 22' sind bevorzugt vom Innengehäuse bzw. vom Außengehäuse 17, 18 beabstandet. Die Rippen 21' und 22' können jedoch auch mit dem Innen- bzw. Außengehäuse verbunden sein.

## Patentansprüche

1. Vorrichtung zur Dämmung der Geräuschabstrahlung von schwingungsfähigen Bestandteilen (1, 1'), insbesondere Fluidbehältern, des Hydrauliksystems von Kraftfahrzeugen, mit wenigstens einer Schwingungsdämpfungsmasse (9, 10, 11 - 15, 16, 20, 21, 22), die an die Wandung (4) des jeweiligen Geräusch zu dämmenden Bestandteils (1, 1') angekoppelt und auf die zu dämpfende(n) Schwingung(en) abgestimmt ist.

2. Vorrichtung nach Anspruch 1, dadurch gekennzeichnet, daß die Schwingungsdämpfungsmasse (9, 10, 11 - 15, 16, 20, 21, 22) auf wenigstens eine abzustimmende Schwingung des Bestandteils (1, 1') abgestimmt ist.

3. Vorrichtung nach Anspruch 1 oder 2, dadurch gekennzeichnet, daß die Schwingungsdämpfungsmasse (9, 10, 11 - 15, 16, 20, 21, 22) innen und/oder außen an der Wandung (4) des Geräusch zu dämmenden Bestandteils (1, 1') angekoppelt ist.

4. Vorrichtung nach Anspruch 1, 2 oder 3, dadurch gekennzeichnet, daß Schwingungsdämpfungsmassen (9, 10, 11 - 15, 16, 20, 21, 22) innen und außen an der Wandung (4) des Geräusch zu dämmenden Bestandteils (1, 1') angekoppelt sind.

5. Vorrichtung nach einem der Ansprüche 1 bis 4, dadurch gekennzeichnet, daß die Schwingungsdämpfungsmasse (9, 10, 11 - 15, 16, 20, 21, 22) durch Wahl der Größe ihrer Masse auf die abzustimmende(n) Schwingung(en) abgestimmt ist.

6. Vorrichtung nach einem der Ansprüche 1 bis 5, dadurch gekennzeichnet, daß die Schwingungsdämpfungsmasse (9, 10, 11 - 15, 16, 20, 21, 22) durch Wahl ihrer Form auf die abzustimmende(n) Schwingung(en) abgestimmt ist.

7. Vorrichtung nach einem der Ansprüche 1 bis 6, dadurch gekennzeichnet, daß die Schwingungsdämpfungsmasse (9, 10, 11 - 15, 16, 20, 21, 22) durch Wahl ihrer Lage auf dem Geräusch zu dämmenden Bestandteil (1, 1') auf die abzustimmende(n) Schwingung(en) abgestimmt ist.

8. Vorrichtung nach einem der Ansprüche 1 bis 9, dadurch gekennzeichnet, daß die Schwingungsdämpfungsmasse (9, 10, 11 - 15, 16, 20, 21, 22) durch Wahl ihres Materials auf die abzustimmende(n) Schwingung(en) des Geräusch zu dämmenden Bestandteils (1, 1') abgestimmt ist.

9. Vorrichtung nach Anspruch 8, dadurch gekennzeichnet, daß die Schwingungsdämpfungsmasse aus demselben Material wie der Geräusch zu dämmende Bestandteil besteht.

10. Vorrichtung nach einem der Ansprüche 1 bis 9, dadurch gekennzeichnet, daß die Schwingungsdämpfungsmasse (9, 10, 11 - 15, 16, 20, 21, 22) durch Wahl der Art ihrer Verbindung mit dem Geräusch zu dämmenden Bestandteil (1, 1') auf die abzustimmende(n) Schwingung(en) abgestimmt ist.

11. Vorrichtung nach einem der Ansprüche 1 bis 10, dadurch gekennzeichnet, daß die Schwingungsdämpfungsmasse (9, 10, 11 - 15, 16, 20, 21, 22) Rippenform hat.

12. Vorrichtung nach Anspruch 11, dadurch gekennzeichnet, daß mehrere Rippen (11- 15) unter gegenseitigem Abstand auf der Wandung (4) des Geräusch zu dämmenden Bestandteils (1, 1') angebracht sind.

13. Vorrichtung nach einem der Ansprüche 1 bis 12, dadurch gekennzeichnet, daß der Geräusch zu dämmende Bestandteil (1') unter Festlegung eines Zwischenraums (17) wenigstens zweiwandig ausgeführt ist, wobei die Wände geräuschdämmend entkoppelt sind.

14. Vorrichtung nach Anspruch 13, dadurch gekennzeichnet, daß der Zwischenraum (17) wenigstens teilweise mit schwingungsdämpfendem Material (20) gefüllt ist.

15. Vorrichtung nach Anspruch 13, dadurch gekennzeichnet, daß der Zwischenraum (17) evakuiert ist.

16. Vorrichtung nach einem der Ansprüche 1 bis 15, dadurch gekennzeichnet, daß es sich bei dem Geräusch zu dämmenden Bestandteil (1, 1') um einen Vorratsbehälter für Hydraulikflüssigkeit handelt.
